# EUROPEAN PATENT APPLICATION

(11) **EP 4 503 079 A1**
(43) Date of publication of application: **05.02.2025**
(21) Application number: 23781136.9
(22) Date of filing: 13.01.2023
(51) Int. Cl.: H01H 31/02, H01H 73/18

(54) **AIR CIRCUIT BREAKER HAVING INSERTION/WITHDRAWAL LINKAGE TYPE ARC COVER**

(30) Priority: 28.03.2022 KR 20220037752
(71) Applicant: LS Electric Co., Ltd., Gyeonggi-do 14119 (KR)
(72) Inventor: CHUNG, Hanbaek, Anyang-si, Gyeonggi-do 14118 (KR)
(74) Representative: K&L Gates LLP
(86) International application number: PCT/KR2023/000654
(87) International publication number: WO 2023/191274

(57) **Abstract**

Disclosed is an air circuit breaker having an insertion/withdrawal linkage type arc cover, the circuit breaker having an arc cover coming into close contact with an arc chute when a main body is inserted into a cradle, thereby preventing a secondary shorting accident of a terminal. The air circuit breaker according to one aspect of the present invention comprises: a main body having a plurality of contacts and a plurality of terminals; a cradle into/from which the main body is inserted/withdrawn, and which includes a plurality of terminals correspondingly connected to the plurality of terminals of the main body; a control module which is raised on the cradle, and which is coupled to a coupling module provided at the main body during lowering, so as to electrically connect the main body to the cradle; and an insertion/withdrawal linkage type arc cover which is provided at the cradle so as to be raised together with the control module, and which is lowered when the main body is coupled to the cradle, so as to come into close contact with the upper part of an arc extinguishing part of the main body and cover same.

## Description

### Technical Field

The present disclosure relates to an insertion/withdrawal type air circuit breaker, and more particularly, to an air circuit breaker having an insertion/withdrawal linkage type arc cover, the air circuit breaker having an arc cover coming into close contact with an arc chute when a main body is inserted into a cradle, thereby preventing a secondary short circuit accident of a terminal.

### Background Art

Generally, a circuit breaker in the related art opens or closes a device configured to receive power from a power transmission and substation system or line, blocks current when a safety accident such as overload or a short circuit occurs, and protects an electric power system and load equipment.

The circuit breaker in the related art includes a mover and a stator in contact with the mover. When the mover is in contact with the stator, a current flows through a line, and when a high current flows through the line due to a safety accident, the mover is separated from the stator to block the high current in the line. Recently, as an electric capacity of an electric power system increases, a high current is needed to be carried to the circuit breaker.

Air circuit breakers may be classified into a fixed-type circuit breaker in which a circuit breaker body is fixedly installed in a distribution panel, and an insertion/withdrawal type air circuit breaker configured to have a cradle, i.e., an enclosure installed in a distribution panel to install or withdraw a circuit breaker body into/from the cradle.

A worker needs to separate a circuit breaker body from an electric circuit and a control circuit to perform maintenance on the fixed-type air circuit breaker. Then, the maintenance of the circuit breaker body is completed, the worker needs to inconveniently connect the circuit breaker body back to the electric circuit and the control circuit. Unlike the fixed-type air circuit breaker, a circuit breaker body in the insertion/withdrawal type air circuit breaker may be automatically connected to or disconnected from a power circuit and a control circuit simply by being inserted into or withdrawn from the cradle. Thus, the insertion/withdrawal type air circuit breaker is widely used due to convenience in the maintenance.

When an arc is generated in a case of blocking due to an accident, the arc is split into plasma in an arc extinguishing part, and ultimately extinguished while emitting metal gas. A general arc cover is assembled in a cradle, but needs to be assembled to be in close contact with an upper portion of the arc extinguishing part to effectively block metal gas.

However, since the insertion/withdrawal type air circuit breaker in the related art is configured to have an arc cover being assembled in a cradle not to interfere with insertion or withdrawn of a main body, there is a gap between an upper portion of an arc extinguishing part and the arch cover. Accordingly, there may be a problem in that a short circuit may occur when metal gas generated during cut off comes into contact with a terminal, thereby causing a secondary short-circuit accident.

### Disclosure of Invention

### Technical Problem

Therefore, to obviate those problems, an aspect of the detailed description is to provide an air circuit breaker having an insertion/withdrawal linkage type arc cover, the air circuit breaker configured such that a main body is separate from an arc extinguishing part before being assembled to a cradle, and is lowered when assembled in the cradle to be in close contact with an upper portion of the arc extinguishing part to seal in metal gas, thus preventing a secondary short circuit accident.

The present disclosure may be embodied in many different forms and should not be construed as being limited to the embodiments set forth herein. Additional aspects will be set forth in part in the description which follows and, in part, will be apparent from the description, or may be learned by practice of the presented embodiments.

### Solution to Problem

To achieve these and other advantages and in accordance with the purpose of the present disclosure, as embodied and broadly described herein, there is provided an air circuit breaker having an insertion/withdrawal linkage type arc cover, the air circuit breaker including: a main body having a plurality of contacts and a plurality of terminals; a cradle into/from which the main body is inserted/withdrawn, and which includes a plurality of terminals correspondingly connected to the plurality of terminals of the main body; a control module disposed to be raised or lowered on the cradle and, when being lowered, coupled to a coupling module equipped in the main body to electrically connect the main body to the cradle; and an insertion/withdrawal linkage type arc cover installed on the cradle to be raised or lowered together with the control module and, when the main body is coupled to the cradle, lowered to come in close contact with an upper portion of an arc extinguishing part of the main body to cover the upper portion of the arc extinguishing part.

The control module may be movable in vertical and horizontal directions, and the insertion/withdrawal linkage type arc cover may be capable of only being raised or lowered in a vertical direction.

The cradle may include a side panel positioned on both side surfaces of the insertion/withdrawal linkage type arc cover.

The side panel may be fixed to the cradle, and the insertion/withdrawal linkage type arc cover may be assembled to the side panel to be raised or lowered only in a vertical direction.

A guide slot may be disposed in the side panel in a vertical direction, and a guide protrusion inserted into the guide slot may be disposed on the insertion/withdrawal linkage type arc cover.

A sliding bar may be installed on the control module in a horizontal direction, and a guide hole may be disposed in the insertion/withdrawal linkage type arc cover, wherein the sliding bar slides through the guide hole

A plurality of sliding bars and a plurality of guide holes may be disposed.

A lower end portion of the sliding bar may be configured to be inclined so that the insertion/withdrawal linkage type arc cover is raised or lowered when the sliding bar moves in a horizontal direction.

An elastic member may be installed between a side panel of the cradle and the insertion/withdrawal linkage type arc cover so that the insertion/withdrawal linkage type arc cover receives an elastic force in an upward direction.

A friction reducing member may be installed between the sliding bar and the guide hole to reduce friction in a contact portion.

A silicon member may be disposed in a lower end portion of the insertion/withdrawal linkage type arc cover to provide a sealing force.

### Advantageous Effects of Invention

In accordance with the configuration described above, an air circuit breaker having an insertion/withdrawal linkage type arc cover according to the present disclosure may operate such that, in association of a main body being inserted into or withdrawn from a cradle, an arc cover is raised to come into close contact with an arc chute to thereby prevent a secondary short circuit accident of a terminal due to leak of metal gas.

Effects of the present disclosure are not limited to the effects described above, and should be understood to include all effects that may be inferred from configurations described in the detailed description or claims of the present disclosure.

### Brief Description of Drawings

FIG. 1 is a perspective view illustrating a maintenance position and a separation position in an air circuit breaker having an insertion/withdrawal linkage type arc cover according to one embodiment of the present disclosure.
FIG. 2 is a perspective view illustrating a test position and a connection position in the air circuit breaker having an insertion/withdrawal linkage type arc cover according to one embodiment of the present disclosure.
FIG. 3 is a side sectional view illustrating a separation position in the air circuit breaker having an insertion/withdrawal linkage type arc cover according to one embodiment of the present disclosure.
FIG. 4 is a side sectional view illustrating a test position in the air circuit breaker having an insertion/withdrawal linkage type arc cover according to one embodiment of the present disclosure.
FIG. 5 is a side sectional view illustrating the connection position in the air circuit breaker having an insertion/withdrawal linkage type arc cover according to one embodiment of the present disclosure.
FIG. 6 is an exploded perspective view of components in a periphery of an arc cover in the air circuit breaker having an insertion/withdrawal linkage type arc cover according to one embodiment of the present disclosure.
FIG. 7 is a perspective view of the arc cover and a control module at the maintenance position and the separation position in the air circuit breaker having an insertion/withdrawal linkage type arc cover according to one embodiment of the present disclosure.
FIG. 8 is a perspective view of the arc cover and the control module at the test position in the air circuit breaker having an insertion/withdrawal linkage type arc cover according to one embodiment of the present disclosure.
FIG. 9 is a perspective view of the arc cover and the control module at the connection position in the air circuit breaker having an insertion/withdrawal linkage type arc cover according to one embodiment of the present disclosure.
FIG. 10 is an operational view illustrating an operation state of raising or lowering an arc cover during withdrawal in an air circuit breaker having an insertion/withdrawal linkage type arc cover according to another embodiment of the present disclosure.

### Mode for the Invention

Hereinafter, embodiments of the present disclosure will be described in detail with reference to the accompanying drawings so that those skilled in the art can easily implement the present disclosure. The present disclosure may, however, be implemented in many different forms and should not be construed as being limited to the embodiments set forth herein. In the description of the inventive disclosure, certain detailed explanations are omitted when it is deemed that they may unnecessarily obscure the essence of the present disclosure. Like numbers refer to like elements throughout the description of the figures.

Terms or words used in this specification and claims should not be interpreted as being limited to have a general meaning or a meaning defined in a dictionary, but should be interpreted as having a meaning and a concept which are consistent with the technical ideas of the present disclosure, based on a principle such that an inventor may properly define concepts of the terms to explain the disclosure of the inventor by using an optimum method.

Therefore, example embodiments will be described in detail with reference to the accompanying drawings. It should be understood, however, that there is no intent to limit example embodiments to the particular forms disclosed, but on the contrary, example embodiments are to cover all modifications, equivalents, and alternatives falling within the scope of the present disclosure.

Terms such as "include" or "has" are used herein and should be understood that they are intended to describe an existence of several components, functions or steps, disclosed in the specification, and it is also understood that greater or fewer components, functions, or steps may likewise be utilized.

When a component is "in front of," "at a rear of," "above," or "below" another component, this means that the component is disposed "in front of," "in rear of," "above," or "below" the another component to be in direct contact with the another component, or to have an intervening component therebetween, unless the context clearly indicates otherwise. In addition, when a component is referred to as being "connected to" another component, this means that the component is directly or indirectly connected to the another component, unless the context clearly indicates otherwise.

Hereinafter, an air circuit breaker 1 having an insertion/withdrawal linkage type arc cover according to one embodiment of the present disclosure is described with reference to the accompanying drawings.

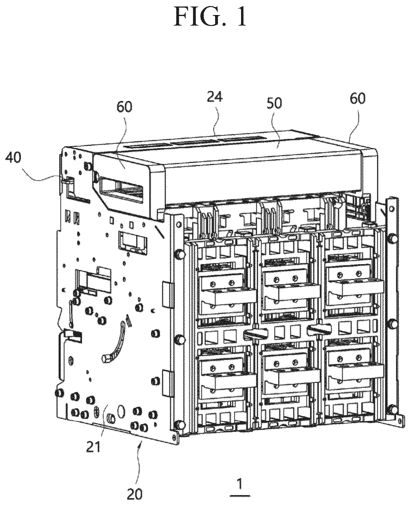

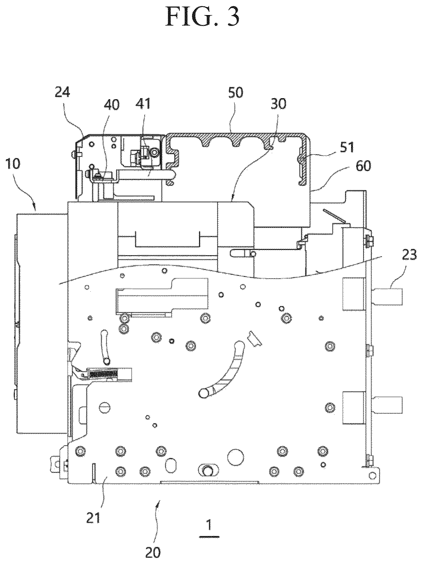

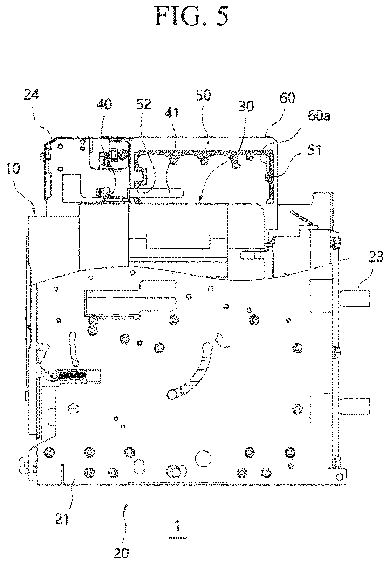

Referring to FIGS. 1 to 9, the air circuit breaker 1 having an insertion/withdrawal linkage type arc cover according to one embodiment of the present disclosure may include a main body 10, a cradle 20, a control module 40, and an insertion/withdrawal linkage type arc cover 50.

Referring to FIGS. 1 to 5, the main body 10 may include a plurality of contacts and a plurality of terminals.

In this case, the main body 10 is a box-shaped structure inserted and assembled into the cradle 20, and equipped therein with electronic devices and machines such as a fixed contact, a movable contact, an opening/closing mechanism, and an arc extinguishing part having an arc chute installed thereon. The main body 10 may include a manipulation portion installed on a front surface of the main body 10 to manipulate the main body 10 of the air circuit breaker, an external terminal equipped on a rear surface of the main body 10 to be connected to an internal terminal of the cradle 20, and a coupling module installed on the main body 20 in a width direction and connected to the control module 40 of the cradle 20 to control the electronic device installed inside the main body 10. Since the control module and the coupling module correspond to the related art, a detailed description thereof is not provided here.

Referring to FIGS. 1 to 9, the main body 10 may be inserted into or withdrawn from the cradle 20, and the cradle 20 may be include a plurality of terminals 23 correspondingly connected to a plurality of terminals on the main body 10.

At this time, the cradle 20 is a box-shaped structure with an open front surface, and includes an external terminal 23 installed on a rear surface to be connected to a power source side circuit and a load side circuit, the control module 40 connected to an internal terminal connected to the external terminal 23 and a control circuit connected to an external control device, and equipped on the cradle 20 in a width direction, a rail installed on both side walls 21 of the cradle 20 to be capable of being inserted into or withdrawn from the cradle 20, a transport device disposed in a lower portion of the cradle 20 to insert or withdraw the main body 10 mounted on the rail into/from the cradle 20, and an ascending/descending device configured to move the control module 40 in a vertical direction in association with the transport device.

Referring to FIGS. 1 to 9 , the control module 40 is disposed to be raised on the cradle 20 and, when being lowered, coupled to the coupling module included in the main body 10 to electrically and physically connect the main body 10 to the cradle 20.

The control module 40 is configured to be moved in a vertical direction along a vertical hole 22a disposed in the side walls 21 of the cradle 20 by the ascending/descending device operated in association with the transport device, and after the control module 40 is lowered by the ascending/descending device and inserted into the cradle 20, when the main body 10 is moved into the cradle 20 by the transport device, the control module 40 is configured to move into the cradle 20 along a horizontal hole 22b connected a lower portion of the vertical hole 22a in a state of being inserted into the coupling module fixed to the main body 10. The vertical hole and the horizontal hole are connected to each other to define a right-angled guide hole 22 having a form of a right angle.

At this time, in a process when the main body 10 of the air circuit breaker is inserted into or withdrawn from the cradle 20, four different assembly positions, that is, a maintenance position, a separation position, a test position, and a connection position are present according to a position of the main body 10 in the air circuit breaker having an insertion/withdrawal linkage type arc cover.

In this case, the maintenance position corresponds to a state in which the main body 10 is completely separated from the cradle 20 to be capable of performing maintenance on internal components. The separation position corresponds to a state in which the main body 10 is partially inserted into the cradle 20, and the control module 40 and the coupling module are located in an upper position and a lower position, respectively, but are not coupled to each other. The test position corresponds to a state in which the control module 40 is lowered by the ascending/descending device according to a guide by the vertical hole 22a and coupled to the coupling module. In this case, a worker may apply a control signal to the main body 10 to check connection and operation of the main body 10. The connection position corresponds to a state in which, when the control module 40 is coupled to the coupling module, the main body 10 is completely inserted into the cradle 20 according to a guide by the horizontal hole 22b and all terminals are connected to each other.

Referring to FIGS. 1 to 9, the insertion/withdrawal linkage type arc cover 50 is installed on the cradle 20 to be raised or lowered together with the control module 40 and, when the main body 10 is coupled to the cradle 20, lowered to come into close contact with an upper portion of an arc extinguishing part 30 of the main body 10 to cover the upper portion of the arc extinguishing part 30.

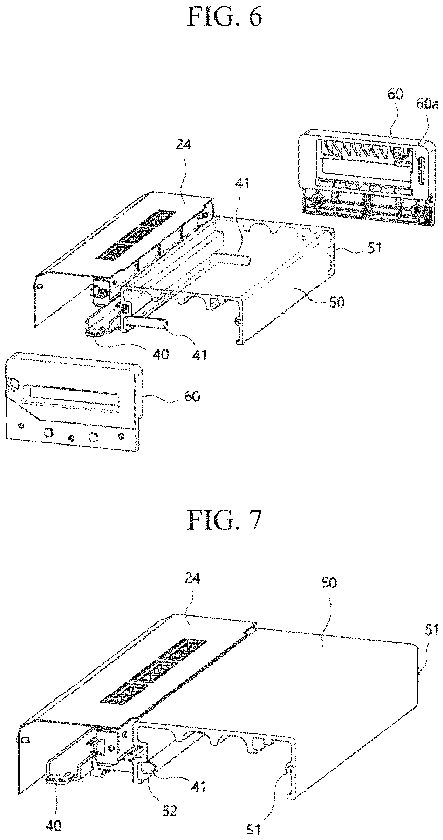

At this time, the control module 40 may move in a vertical direction and a horizontal direction, and the insertion/withdrawal linkage type arc cover 50 may move only by being raised or lowered in a vertical direction. To do so, referring to FIG. 6, side panels 60 located on both sides of the insertion/withdrawal linkage type arc cover 50 is installed in the cradle 20. The side panels 60 are fixed to the cradle 20, and the insertion/withdrawal linkage type arc cover 50 may be assembled to the side panels 60 to be raised or lowered only in a vertical direction. In addition, a guide slot 60a is disposed in the side panels 60 in a vertical direction, and the insertion/withdrawal linkage type arc cover 50 may include a guide protrusion 51 inserted into the guide slot 60a. In addition, a sliding bar 41 may be installed on the control module 40 in a horizontal direction, and the insertion/withdrawal linkage type arc cover 50 may include a guide hole 52 through which the sliding bar 41 slides.

At this time, referring to FIG. 6, two or more sliding bars 41 may be installed for stable operation.

When the control module 40 is raised or lowered, and moved horizontally according to a connection structure including the control module 40 and the insertion/withdrawal linkage type arc cover 50, the insertion/withdrawal linkage type arc cover 50 does not move in a horizontal direction, and only operates to be raised or lowered along the control module 40.

Thus, when the main body 10 is inserted and coupled into the cradle 20, the insertion/withdrawal linkage type arc cover 50 does not move in a horizontal direction but only is raised or lowered above the arc extinguishing part 30 along the control module 40. Accordingly, the insertion/withdrawal linkage type arc cover 50 does not interfere with other components, but after the main body is inserted into the cradle 20, covers and completely seals the arc extinguishing part 30. Resultantly, metal gas rising from the arc extinguishing part 30 may be prevented from flowing toward the terminals 23 in a rear portion of the circuit breaker.

Meanwhile, a silicon member may be disposed to provide sealing force in a lower end portion of the insertion/withdrawal linkage type arc cover 50. Since the insertion/withdrawal linkage type arc cover 50 is made of a hard material, even when the insertion/withdrawal linkage type arc cover 50 is seated to cover the arc extinguishing part 30, a small gap may be present therebetween. Thus, soft silicon may be is placed in the lower portion of the insertion/withdrawal linkage type arc cover 50 to prevent metal gas from flowing out through the small gap.

FIGS. 1, 3, and 7 illustrate states of a maintenance position and a separation position in the air circuit breaker 1 of an insertion/withdrawal linkage type arc cover according to one embodiment of the present disclosure. These drawings illustrate a state in which the main body 10 is not inserted or partially inserted into the cradle 20, and the control module 40 is located in an upper portion of the vertical hole 22a. Accordingly, the insertion/withdrawal linkage type arc cover 50 is also in a state of being raised to be apart from an upper portion of the arc extinguishing part 30, and is located at a same height as that of the front panel 24. In this state, the insertion/withdrawal linkage type arc cover 50 is apart from the arc extinguishing part 30, and thus, does not interfere with other components during insertion of the main body 10.

FIG. 6 is an exploded perspective view of components in a periphery of the insertion/withdrawal linkage type arc cover 50 in the air circuit breaker 1 having an insertion/withdrawal linkage type arc cover according to one embodiment of the present disclosure invention. Since the insertion/withdrawal linkage type arc cover 50 is supported in a state when the sliding bar 41 is inserted into the guide hole 52, the insertion/withdrawal linkage type arc cover 50 has a same raising/lowering height as that of the control module 40. In addition, the insertion/withdrawal linkage type arc cover 50 may be assembled to be raised or lowered as guided by the side panels 60. Thus, during insertion or withdrawal of the main body 10, the control module 40 may be raised or lowered along the vertical hole 22a and, when being lowered, move horizontally along the horizontal hole 22b. In association with this, the insertion/withdrawal linkage type arc cover 50 is raised or lowered together with the control module 40 when the control module 40 is raised or lowered. However, when the control module 40 moves horizontally, the sliding bar 41 may only slide along the guide hole 52 and the guide protrusion 51 of the insertion/withdrawal linkage type arc cover 50 may be only raised or lowered along the guide slot 60a. Accordingly, the insertion/withdrawal linkage type arc cover 50 does not move horizontally, but may be only raised or lowered in place.

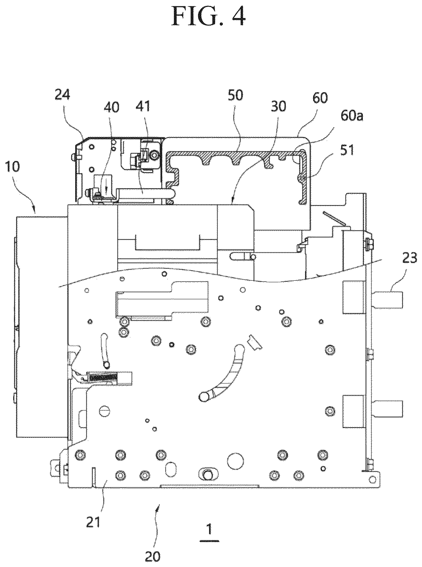

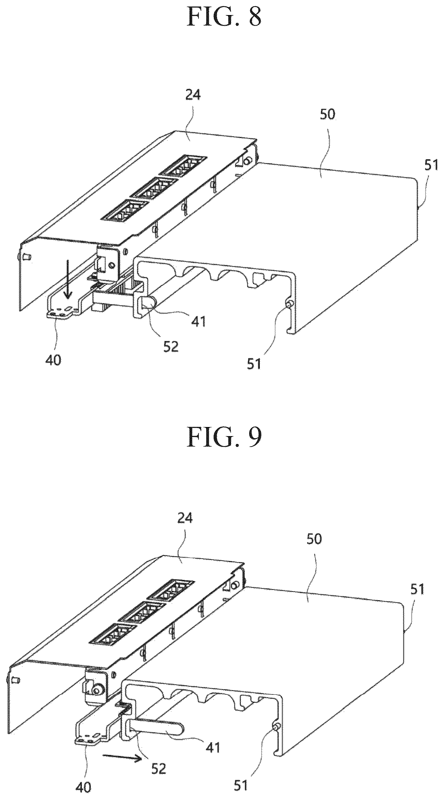

FIGS. 4 and 8 illustrate a state of a test position in the air circuit breaker 1 having an insertion/withdrawal linkage type arc cover according to one embodiment of the present disclosure at the test position. The control module 40 is in a state of being lowered from an upper end to a lower end by the ascending/descending device according to guidance by the vertical hole 22a. At this time, the control module 40 may be coupled to the coupling module to determine whether a test operation is to be performed. In this case, the insertion/withdrawal linkage type arc cover 50 is located in a position in a close contact with the arc extinguishing part 30 to cover and seal the arc extinguishing part 30.

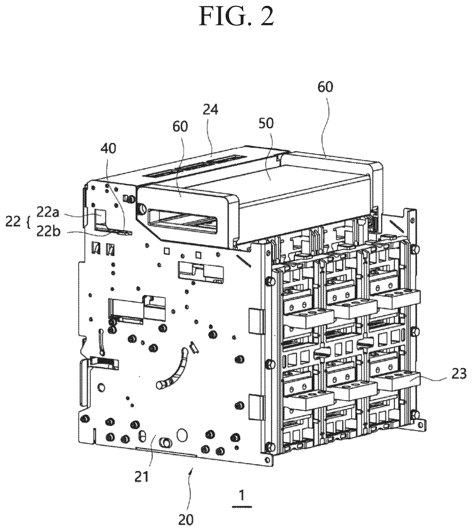

FIGS. 2, 5, and 9 illustrate a state of the connection position in the air circuit breaker 1 having an insertion/withdrawal linkage type arc cover according to one embodiment of the present disclosure. These drawings illustrate a state in which, from the test position of FIG. 8, the main body 10 has reached the connection position by being completely coupled to the cradle 20. In this state, the control module 40 has moved inwardly along the horizontal hole 22b from the test position. At this time, since the sliding bar 41 slides along the guide hole 52, the insertion/withdrawal linkage type arc cover 50 covers and maintains the arc extinguishing part 30 at an original position. In this state, the circuit breaker can be operated, and the insertion/withdrawal linkage type arc cover 50 is in close contact with the arc extinguishing part 30 to completely cover the arc extinguishing part 30. Thus, the metal gas generated from the arc extinguishing part 30 is prevented from flowing toward the terminal 23 at a rear.

In the state of the connection position, withdrawal of the main body 10 from the cradle 20 may be performed in an order opposite to an order performed in the above-described insertion method.

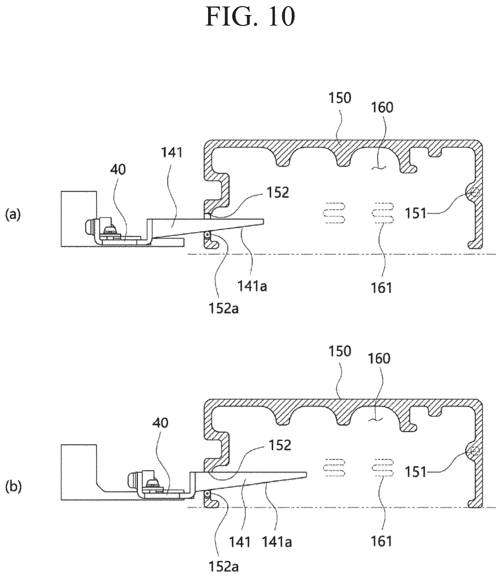

FIG. 10 is an operational view illustrating an operation state of raising or lowering an arc cover during withdrawal in an air circuit breaker having an insertion/withdrawal linkage type arc cover according to another embodiment of the present disclosure. Unlike the one embodiment described above, in this embodiment, a lower surface of a sliding bar is configured to have an inclined surface, and the arc cover receives elastic force in an upward direction from an elastic member, i.e., a spring. The arc cover is raised or lowered when a main body is withdrawn like the one embodiment described above. However, according to the technical idea added to the another embodiment, friction between a lower portion of the arc cover and the air circuit breaker may be prevented.

Here, a lower end of the sliding bar may be configured to have an inclined surface so that the arc cover may be raised or lowered when the sliding bar moves in a horizontal direction.

In this case, a spring, i.e., an elastic member may be installed between a side panel and the arc cover so that the arc cover may receive elastic force in an upward direction. A plurality of springs may be installed so that the elastic force uniformly acts on the arc cover.

In this case, a friction reducing member may be installed between the sliding bar and a guide hole to reduce friction at an area of contact therebetween. Here, a roller may be installed in a lower end portion of the guide hole as a friction reducing member. Accordingly, the inclined surface of the sliding bar becomes a rail, and the roller corresponds to the inclined surface, i.e., the rail. Here, another member such as a bearing, instead of the roller, may be used in a portion of friction between the inclined surface and the guide hole. Alternatively, a point contact, i.e., a minimum contact may be made in the friction portion, or the friction portion may be coated with a friction reducing agent.

Referring to FIG. 10, (a) illustrates a state before the arc cover is lowered, and (b) illustrates after the arc cover is lowered. First, a lower end of the spring is supported on one side of the side panel, and an upper end of the spring is supported on one side of the arc cover. Thus, the arc cover is provided with an elastic force in an upward direction with respect to the side panel. Therefore, due to the elastic force, the inclined surface of the sliding bar is maintained in close contact with the roller at all times.

In (a) of FIG. 10, the sliding bar begins to be inserted into the guide hole. Since the control module is kept at a same height, as the control module moves horizontally, the sliding bar fixed thereto also moves horizontally to a right side. Due to the horizontal movement of the sliding bar to a right side, when the roller is lowered along the inclined surface in rolling contact with the inclined surface, the arc cover is also lowered by overcoming elastic force of the spring resultantly. (b) of FIG. 10 illustrates a state in which the arc cover is completely lowered . On the other hand, when the sliding bar moves horizontally to a left side, the arc cover may return to the state shown in (a) of FIG. 10 due to the elastic force of the spring.

Here, like the raising or lowering operation of the arc cover as shown in FIG. 10, while the arc cover is lowered to a final position shown in (b) of FIG. 10, i.e., an upper end portion of the main body of the air circuit breaker, the main body of the air circuit breaker body also moves horizontally. However, since the arc cover is in contact with the main body of the air circuit breaker only at the final position, occurrence of friction during operation may be prevented.

In addition, like the one embodiment described above, a plurality of sliding bars having an inclined surface may be disposed to implement stable operation.

Although embodiments of the present disclosure have been described, the aspects of the present disclosure described as above is not limited by the embodiments described herein. It should be apparent to those skilled in the art that various additions, changes, deletions, and modifications of components which are not exemplified herein but are still within the spirit and scope of the present disclosure may be made.

### [Description of reference numerals]

1: Air circuit breaker
10; Main body
20: Cradle
21: Side wall
22a: Vertical hole
22b: Horizontal hole
23: Terminal
24: Front panel
30: Arc extinguishing part
40: Control module
41, 141: Sliding bar
50, 150: Arc cover
51: Guide protrusion
52, 152: Guide hole
60, 160: Side panel
60a: Guide slot
141a: Inclined surface
152a: Roller
161: Spring

## Claims

1. An air circuit breaker having an insertion/withdrawal linkage type arc cover, the air circuit breaker comprising:
a main body having a plurality of contacts and a plurality of terminals;
a cradle into/from which the main body is inserted/withdrawn, and which comprises a plurality of terminals correspondingly connected to the plurality of terminals of the main body;
a control module disposed to be raised or lowered on the cradle and, when being lowered, coupled to a coupling module equipped in the main body to electrically connect the main body to the cradle; and
an insertion/withdrawal linkage type arc cover installed on the cradle to be raised or lowered together with the control module and, when the main body is coupled to the cradle, lowered to come in close contact with an upper portion of an arc extinguishing part of the main body to cover the upper portion of the arc extinguishing part.

2. The air circuit breaker of claim 1, wherein the control module is movable in vertical and horizontal directions, and the insertion/withdrawal linkage type arc cover is capable of only being raised or lowered in a vertical direction.

3. The air circuit breaker of claim 1, wherein the cradle comprises a side panel positioned on both side surfaces of the insertion/withdrawal linkage type arc cover.

4. The air circuit breaker of claim 3, wherein the side panel is fixed to the cradle, and the insertion/withdrawal linkage type arc cover is assembled to the side panel to be raised or lowered only in a vertical direction.

5. The air circuit breaker of claim 4, wherein a guide slot is disposed in the side panel in a vertical direction, and a guide protrusion inserted into the guide slot is disposed on the insertion/withdrawal linkage type arc cover.

6. The air circuit breaker of claim 1, wherein a sliding bar is installed on the control module in a horizontal direction, and a guide hole is disposed in the insertion/withdrawal linkage type arc cover, wherein the sliding bar slides through the guide hole.

7. The air circuit breaker of claim 6, wherein a plurality of sliding bars and a plurality of guide holes are disposed.

8. The air circuit breaker of claim 6, wherein a lower end portion of the sliding bar is configured to be inclined so that the insertion/withdrawal linkage type arc cover is raised or lowered when the sliding bar moves in a horizontal direction.

9. The air circuit breaker of claim 8, wherein an elastic member is installed between a side panel of the cradle and the insertion/withdrawal linkage type arc cover so that the insertion/withdrawal linkage type arc cover receives an elastic force in an upward direction.

10. The air circuit breaker of claim 6, wherein a friction reducing member is installed between the sliding bar and the guide hole to reduce friction in a contact portion.

11. The air circuit breaker of claim 1, wherein a silicon member is disposed in a lower end portion of the insertion/withdrawal linkage type arc cover to provide a sealing force.
